# FASCICULE DE BREVET EUROPEEN

(11) **EP 3 924 175 B1**
(45) Date de publication et mention de la délivrance du brevet: **10.09.2025**
(21) Numéro de dépôt: 20708160.5
(22) Date de dépôt: 31.01.2020
(51) Int. Cl.: B29C 70/02, B29C 70/08, B29C 70/48, B29C 70/24, B29K 105/16

(54) **PROCÉDÉ DE FABRICATION D'UNE PIÈCE EN MATÉRIAU COMPOSITE À MATRICE RENFORCÉE ET DISPOSITIF DE MISE EN OEUVRE**
VERFAHREN ZUR HERSTELLUNG EINES BAUTEILS AUS EINEM VERBUNDWERKSTOFF MIT EINER VERSTÄRKTEN MATRIX UND VORRICHTUNG ZUR DURCHFÜHRUNG DES VERFAHRENS
METHOD FOR MANUFACTURING A COMPONENT MADE OF A COMPOSITE MATERIAL WITH A REINFORCED MATRIX, AND DEVICE FOR THE IMPLEMENTATION THEREOF

(30) Priorité: 13.02.2019 FR 1901449
(43) Date de publication de la demande: 22.12.2021
(73) Titulaire: SAFRAN, 75015 Paris (FR); SAFRAN AIRCRAFT ENGINES, 75015 Paris (FR)
(72) Inventeur: MARCHAL, Yann, Didier, Simon, 77550 MOISSY-CRAMAYEL (FR); COUPE, Dominique, Marie, Christian, 77550 MOISSY-CRAMAYEL (FR); DAMBRINE, Bruno, Jacques, Gérard, 77550 MOISSY-CRAMAYEL (FR)
(74) Mandataire: Cabinet Beau de Loménie
(86) Numéro de dépôt international: PCT/FR2020/050166
(87) Numéro de publication internationale: WO 2020/178492

(56) Documents cités:
- EP-A1- 1 526 285
- EP-B1- 1 526 285
- WO-A1-2005/075048
- WO-A1-2015/184151
- US-A1- 2008 286 564

## Description

### Domaine Technique

L'invention concerne la fabrication d'une pièce en matériau composite comprenant un renfort fibreux à base de fibres de carbone densifié par une matrice.

Elle concerne plus précisément la fabrication de pièces en matériau composite pour turbomachines à partir d'une structure fibreuse obtenue par tissage tridimensionnel de fibres de carbone et densifiée par une matrice renforcée.

### Technique antérieure

La réalisation de pièces en matériau composite pour turbomachines, telles que des aubes pour moteurs à turbine à gaz, a déjà été proposée. On pourra se référer par exemple au document EP 1 526 285 qui décrit la fabrication d'une aube de soufflante par réalisation d'une préforme fibreuse par tissage tridimensionnel (3D) et densification de la préforme par une matrice organique.

Par tissage 3D, on entend ici un tissage multicouche utilisant plusieurs couches de fils de trame et plusieurs couches de fils de chaîne, avec des fils de chaîne qui lient entre eux des fils de trame de différentes couches.

Typiquement, ces pièces en matériau composite à matrice organique (CMO) sont fabriquées à partir d'une structure fibreuse obtenue par tissage 3D, cette structure fibreuse étant mise en place dans un moule fermé avant d'injecter à l'intérieur de celui-ci une résine au moins jusqu'à rigidification (ou consolidation) de la préforme.

Il a été montré qu'en cas d'endommagement de pièces en matériau composite ainsi obtenues, le premier niveau d'endommagement se situe dans la résine. Or, ce premier niveau d'endommagement est un paramètre de design de la pièce qui est fondamental car il est directement lié à la capacité du matériau à endurer les chargements tout au long de sa durée de vie.

Augmenter le niveau de premier endommagement de la pièce permet donc, soit d'augmenter la durée de vie de la pièce, soit de pouvoir alléger la pièce en permettant de la concevoir avec un niveau de chargement plus important.

A cet effet, pour augmenter le niveau de premier endommagement de la pièce, il est possible de modifier la formulation chimique de la résine utilisée pour la renforcer. Cependant, cette possibilité se trouve limitée du fait qu'elle nécessite une caractérisation complète du matériau composite fabriqué, ce qui s'avère long et onéreux. De plus, cette caractérisation du matériau composite s'effectue généralement au détriment d'autres propriétés de la résine (tenue à la température, etc.).

Il est fait référence également au document WO2015/184151 A1.

### Exposé de l'invention

L'invention a donc pour objet de proposer un procédé de fabrication d'une pièce en matériau composite qui permette d'augmenter le niveau de premier endommagement de la pièce sans modifier la formulation chimique de la résine.

Ce but est atteint grâce à un procédé de fabrication d'une pièce en matériau composite comprenant un renfort fibreux à base de fibres de carbone densifié par une matrice, le procédé comprenant successivement la réalisation d'une structure fibreuse par tissage tridimensionnel multicouches, la mise en place dans un moule fermé de la structure fibreuse, et l'injection dans le moule d'une résine, et dans lequel, conformément à l'invention, au cours du tissage de la structure fibreuse, le procédé comprend en outre la projection de nanoparticules de carbone sur les fibres de carbone.

La présente invention est remarquable en ce qu'elle prévoit de renforcer la résine utilisée par l'ajout au cours du tissage de la structure fibreuse de nanoparticules de carbone (de type nanotubes de carbone ou graphène). Cet ajout s'effectue ainsi sans modifier la formulation chimique de la résine. Il évite également de former des poches de résine pure au sein du matériau. Au contraire, l'invention permet de placer autour de chaque fibre de carbone des nanoparticules de carbone afin de les renforcer.

De la sorte, les nanoparticules ajoutées au cours du tissage de la structure fibreuse permettent de renforcer la résine sans perturber la structure tissée et sans modifier la formulation chimique de la résine. Il en résulte que le niveau de premier endommagement de la pièce peut être augmenté sans que cela se fasse au détriment d'autres propriétés de la résine.

Le tissage de la structure fibreuse est réalisé, selon l'invention, à l'aide d'un métier à tisser. Dans ce cas, la projection de nanoparticules de carbone sur les fibres de carbone est réalisée au niveau d'une ouverture de foule créée par le soulèvement de certains fils de carbone par rapport aux autres.

De même, le procédé peut comprendre en outre la projection de nanoparticules de carbone sur la structure fibreuse avant sa mise en place dans le moule. Cette projection permet d'éviter les phénomènes de filtration en positionnant directement les nanoparticules avant l'étape d'injection. Le niveau de premier endommagement de la pièce s'en trouve encore augmenté.

L'invention a également pour objet un dispositif pour la mise en œuvre du procédé tel que défini précédemment, comprenant un métier à tisser pour la réalisation d'une structure fibreuse par tissage tridimensionnel multicouches, le métier à tisser comprenant : un harnais constitué d'une planche d'empoutage et d'une pluralité de lisses dans lesquels sont entrés des fils de chaîne, chaque lisse étant animée d'un mouvement d'oscillation vertical pour soulever certains fils de chaîne afin de créer une ouverture de foule permettant l'introduction de fils de trame ; un peigne muni de dents pour permettre la distribution des fils de chaîne et le tassage des fils de trame après leur passage entre les fils de chaîne ; et des moyens de projection de nanoparticules de carbone montés sur le peigne.

Les moyens de projection peuvent comprendre une buse d'injection montée sur un cadre du peigne et qui est reliée par un tuyau à un réservoir de nanoparticules de carbone.

Alternativement, les moyens de projection peuvent être formés par des dents du peigne qui sont creuses et qui sont reliées à un réservoir de nanoparticules de carbone.

Encore alternativement, les moyens de projection comprennent une buse d'injection montée sur des barres de maintien de la structure fibreuse au point de tissage et qui est reliée par un tuyau à un réservoir de nanoparticules de carbone.

### Brève description des dessins

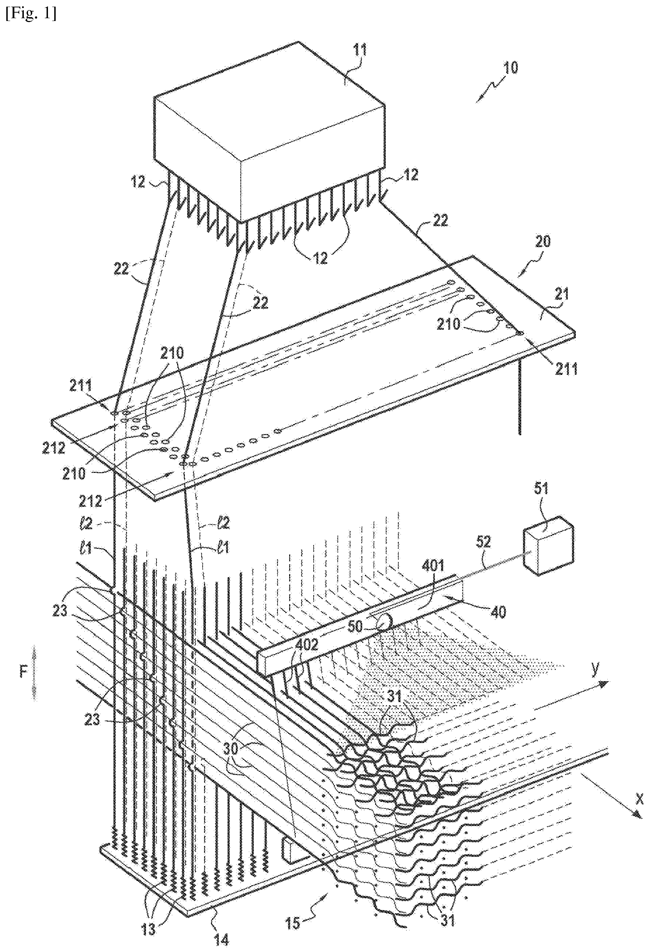

[Fig. 1] La figure 1 est une vue schématique montrant un métier à tisser pour la mise en œuvre du procédé selon l'invention.

### Description des modes de réalisation

L'invention concerne un procédé de fabrication d'une pièce en matériau composite, notamment d'une pièce de turbomachine telle que par exemple une aube de soufflante, comprenant un renfort fibreux à base de fibres de carbone densifié par une matrice organique.

De façon connue, un tel procédé comprend successivement la réalisation d'une structure fibreuse par tissage tridimensionnel multicouches, la mise en place dans un moule fermé de la structure fibreuse, et l'injection dans le moule d'une résine, caractérisé en ce qu'au cours du tissage de la structure fibreuse

Par tissage tridimensionnel (3D), on entend ici un tissage multicouche utilisant plusieurs couches de fils de trame et plusieurs couches de fils de chaîne, avec des fils de chaîne qui lient entre eux des fils de trame de différentes couches. Différents types d'armures de tissage 3D peuvent être utilisées, par exemple des armures interlock, multi-satin, multi-toile, multi-sergé. On pourra se référer notamment au document WO 2006/136755 dont le contenu est incorporé ici par voie de référence.

Le dépôt de la matrice dans la structure fibreuse ainsi formée est réalisée en maintenant la structure dans le moule au moins jusqu'à rigidification (ou consolidation) de la structure.

La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique.

Dans le cas d'une matrice organique, la structure fibreuse est imprégnée par une composition contenant la résine précurseur de matrice, avant conformation dans un outillage, ou après conformation, l'imprégnation étant dans ce dernier cas réalisée par exemple par infusion ou par un processus de type RTM (pour "Resin Transfer Moulding").

Dans le cas d'une matrice en carbone ou en céramique, la densification pourra être réalisée par infiltration chimique en phase gazeuse, ou CVI (pour "Chemical Vapor Infiltration") ou par imprégnation par une composition liquide contenant une résine précurseur de carbone ou de céramique et traitement thermique de pyrolyse ou céramisation du précurseur, ces procédés étant bien connus en soi.

Le tissage 3D de la structure fibreuse est réalisé au moyen d'un métier à tisser tel que celui illustré sur la figure 1.

De manière connue (voir par exemple la publication EP 1 526 285 A1), un tel métier à tisser 10 est équipé d'une mécanique Jacquard 11 supportée par une superstructure non représentée sur la figure 1.

Le métier à tisser 10 comprend également un harnais 20 constitué d'une planche d'empoutage 21 et de fils de commande ou lisses 22, chaque lisse 22 étant reliée à une extrémité à un crochet de commande 12 de la mécanique Jacquard 11 et à l'autre extrémité à un ressort de rappel 13 fixé au bâti 14 du métier à tisser 10.

Chaque lisse 22 comprend un œillet 23 traversé par un fil de chaîne 30. Les lisses 22 et leur œillet 23 associé sont animés d'un mouvement d'oscillation sensiblement vertical représenté par la double flèche F sous les efforts de traction exercés respectivement par les crochets de commande 12 et les ressorts de rappel 13. Les lisses 22 permettent de soulever certains fils de chaîne 30 et de créer ainsi une foule 15 permettant l'introduction de fils de trame 31 grâce à une navette (non représentée sur la figure 1).

Les lisses 22 sont réparties spatialement en fonction de la position des trous 210 de la planche d'empoutage 21, c'est-à-dire suivant une pluralité de colonnes 211 et de lignes 212.

La densité des trous 210 dans la planche d'empoutage correspond à la densité du tissu à réaliser, c'est-à-dire qu'on retrouve dans la planche d'empoutage un espacement entre chaque colonne de trous équivalent à celui présent entre chaque colonne de chaîne dans le tissu à réaliser.

Le métier à tisser comprend également un peigne 40 qui est positionné au niveau de la foule 15 afin de permettre la distribution des fils de chaîne 30 et le tassage du fil de trame 31 après chaque passage de navette. De façon connue, il est constitué d'un cadre 401 portant une série de fins câbles tendus 402 formant les dents du peigne.

Selon l'invention, il est prévu d'augmenter le niveau de premier endommagement de la pièce en matériau composite fabriquée à partir d'un tel procédé, sans pour autant modifier la formulation chimique de la résine utilisée.

A cet effet, l'invention prévoit la projection de nanoparticules de carbone (du type nanotubes de carbone ou graphène par exemple) sur les fibres de carbone au cours du tissage de la structure fibreuse.

En pratique, il est particulièrement avantageux de profiter de l'ouverture de foule 15 créée par le soulèvement de certains fils de chaîne 30 par les lisses 22. En effet, la foule 15 est un espace de passage angulaire qui facilite particulièrement la projection de nanoparticules de carbone sur les fibres de carbone de la structure fibreuse.

Comme représenté sur la figure 1, on pourra par exemple positionner une buse d'injection 50 sur le cadre 401 du peigne 40 du métier à tisser, cette buse d'injection étant dirigée vers l'ouverture de foule pour atteindre un maximum de fibres de carbone 30, 31.

Dans cette configuration, la buse d'injection est avantageusement reliée à un réservoir 51 contenant des nanoparticules de carbone par l'intermédiaire d'un tuyau 52 courant le long du cadre 401 du peigne.

Dans une variante de mise en œuvre non représentée, on pourra recourir à des dents 402 du peigne qui sont creuses afin d'y faire circuler les nanoparticules de carbone depuis le réservoir 51. Dans cette variante, la présence de la buse d'injection et du tuyau est donc remplacée par ces dents creuses.

Dans une autre variante de mise en œuvre non représentée, on pourra recourir à une buse d'injection de nanoparticules de carbone qui est montée au niveau des barres de maintien de la structure fibreuse qui typiquement permettent de maintenir le tissu au point de tissage. Cette variante permet ainsi de parfaitement localiser la projection de nanoparticules.

Par ailleurs, le niveau de premier endommagement de la pièce en matériau composite peut être davantage augmenté en ajoutant au procédé d'injection de nanoparticules de carbone précédemment décrit des manipulations supplémentaires décrites ci-après.

Toujours dans le but d'augmenter davantage le niveau de premier endommagement, il peut également être prévu, en alternative ou en complément de la manipulation précédente, de projeter des nanoparticules de carbone directement sur la structure fibreuse avant sa mise en place dans le moule. Cette manipulation permet d'éviter les phénomènes de filtration évoqués précédemment.

## Revendications

1. Procédé de fabrication d'une pièce en matériau composite comprenant un renfort fibreux à base de fibres de carbone densifié par une matrice, le procédé comprenant successivement la réalisation d'une structure fibreuse par tissage tridimensionnel multicouches, la mise en place dans un moule fermé de la structure fibreuse, et l'injection dans le moule d'une résine, tel qu'au cours du tissage de la structure fibreuse, le procédé comprend en outre la projection de nanoparticules de carbone sur les fibres de carbone, le tissage de la structure fibreuse étant réalisé à l'aide d'un métier à tisser (10), et la projection de nanoparticules de carbone sur les fibres de carbone étant réalisée au niveau d'une ouverture de foule (15) créée par le soulèvement de certains fils de carbone par rapport aux autres.

2. Procédé selon la revendication 1, comprenant en outre la projection de nanoparticules de carbone sur la structure fibreuse avant sa mise en place dans le moule.

3. Dispositif pour la mise en œuvre du procédé selon l'une quelconque des revendications 1 ou 2, comprenant un métier à tisser (10) pour la réalisation d'une structure fibreuse par tissage tridimensionnel multicouches, le métier à tisser comprenant : un harnais (20) constitué d'une planche d'empoutage (21) et d'une pluralité de lisses (22) dans lesquels sont entrés des fils de chaîne (30), chaque lisse étant animée d'un mouvement d'oscillation vertical pour soulever certains fils de chaîne afin de créer une ouverture de foule (15) permettant l'introduction de fils de trame (31) ; un peigne (40) muni de dents (402) pour permettre la distribution des fils de chaîne et le tassage des fils de trame après leur passage entre les fils de chaîne ; et des moyens de projection (50) de nanoparticules de carbone montés sur le peigne.

4. Dispositif selon la revendication 3, dans lequel les moyens de projection comprennent une buse d'injection (50) montée sur un cadre (401) du peigne et qui est reliée par un tuyau (52) à un réservoir (51) de nanoparticules de carbone.

5. Dispositif selon la revendication 4, dans lequel les moyens de projection sont formés par des dents du peigne qui sont creuses et qui sont reliées à un réservoir de nanoparticules de carbone.

6. Dispositif selon la revendication 4, dans lequel les moyens de projection comprennent une buse d'injection montée sur des barres de maintien de la structure fibreuse au point de tissage et qui est reliée par un tuyau à un réservoir de nanoparticules de carbone.

## Patentansprüche

1. Verfahren zur Herstellung eines Teils aus Verbundmaterial umfassend eine Faserverstärkung auf Basis von Kohlenstofffasern, die durch eine Matrix verdichtet ist, wobei das Verfahren der Reihe nach der Verwirklichung eines Fasergebildes durch dreidimensionale Verwebung mit mehreren Lagen, die Platzierung des Fasergebildes in einer geschlossenen Form und die Einspritzung eines Harzes in die Form umfasst, so dass während der Verwebung des Fasergebildes das Verfahren ferner das Aufsprühen von Kohlenstoff-Nanopartikeln auf die Kohlenstofffasern umfasst,
wobei die Verwebung des Fasergebildes mithilfe einer Webvorrichtung (10) erfolgt, und das Aufsprühen von Kohlenstoff-Nanopartikeln auf die Kohlenstofffasern an einer Fachöffnung (15) erfolgt, die durch die Anhebung bestimmter Kohlenstofffäden in Bezug auf die anderen erzeugt wird.

2. Verfahren nach Anspruch 1, umfassend ferner das Aufsprühen von Kohlenstoff-Nanopartikeln auf das Fasergebilde vor seiner Platzierung in der Form.

3. Vorrichtung zur Umsetzung des Verfahrens nach einem der Ansprüche 1 oder 2, umfassend eine Webvorrichtung (10) für die Verwirklichung eines Fasergebildes durch dreidimensionale Verwebung mit mehreren Lagen, wobei die Webvorrichtung umfasst: ein Geschirr (20), das aus einem Schlichtbrett (21) und einer Vielzahl von Litzen (22) besteht, in die Kettfäden (30) eingeführt werden, wobei jede Litze durch eine vertikale Oszillation bewegt wird, um bestimmte Kettfäden anzuheben, um eine Fachöffnung (15) zu erzeugen, die das Einführen von Schussfäden (31) erlaubt, einen Kamm (40) mit Zähnen (402), um die Verteilung der Kettfäden und das Anschlagen der Schussfäden nach ihrem Durchgang zwischen den Kettfäden zu erlauben, und Mittel zum Aufsprühen (50) von Kohlenstoff-Nanopartikeln, die auf dem Kamm montiert sind.

4. Vorrichtung nach Anspruch 3, wobei die Mittel zum Aufsprühen eine Einspritzdüse (50) umfassen, die auf einem Rahmen (401) des Kamms montiert ist und die durch einen Schlauch (52) mit einem Reservoir (51) für Kohlenstoff-Nanopartikel verbunden ist.

5. Vorrichtung nach Anspruch 4, wobei die Mittel zum Aufsprühen durch die Zähne des Kamms gebildet werden, die hohl sind und die mit einem Reservoir für Kohlenstoff-Nanopartikel verbunden sind.

6. Vorrichtung nach Anspruch 4, wobei die Mittel zum Aufsprühen eine Einspritzdüse umfassen, die auf Haltestangen der Faserstruktur am Verwebungspunkt montiert ist und die durch einen Schlauch mit einem Reservoir für Kohlenstoff-Nanopartikel verbunden ist.

## Claims

1. A process for manufacturing a composite material component comprising a fiber reinforcement based on carbon fibers densified by a matrix, the process comprising successively producing a fiber structure by multilayer three-dimensional weaving, placing the fiber structure in a closed mold, and injecting a resin into the mold, wherein during weaving of the fiber structure, the process further comprises spraying carbon nanoparticles onto the carbon fibers, the weaving of the fiber structure being performed using a loom, and the spraying of carbon nanoparticles onto the carbon fibers being performed at a shed opening (15) created by lifting certain carbon threads from others.

2. The process as claimed in claim 1, further comprising spraying carbon nanoparticles onto the fiber structure prior to placing it in the mold.

3. A device for carrying out the process as claimed in any one of claims 1 or 2, comprising a loom (10) for producing a fiber structure by multilayer three-dimensional weaving, the loom comprising: a harness (20) consisting of a stuffing board (21) and a plurality of heddles (22) into which warp threads (30) are inserted, each heddle being animated by a vertical oscillation movement to lift certain warp threads in order to create a shed opening (15) allowing weft threads (31) to be inserted; a comb (40) provided with teeth (402) for distributing the warp threads and compacting the weft threads after they have passed between the warp threads; and carbon nanoparticle spraying means (50) mounted on the comb.

4. The device as claimed in claim 3, wherein the spraying means comprise an injection nozzle (50) mounted on a frame (401) of the comb and which is connected by a pipe (52) to a reservoir (51) of carbon nanoparticles.

5. The device as claimed in claim 4, wherein the spraying means are formed by comb teeth that are hollow and are connected to a reservoir of carbon nanoparticles.

6. The device as claimed in claim 4, wherein the spraying means comprises an injection nozzle mounted on bars holding the fiber structure at the weaving point and which is connected by a pipe to a reservoir of carbon nanoparticles.
